# EUROPEAN PATENT APPLICATION

(11) **EP 2 980 402 A1**
(43) Date of publication of application: **03.02.2016**
(21) Application number: 15178733.0
(22) Date of filing: 28.07.2015
(51) Int. Cl.: F03D 7/02

(54) **CONTROL UNIT OF WIND POWER STATION AND METHOD FOR CONTROLLING WIND POWER STATION**

(30) Priority: 31.07.2014 PL 40904414
(71) Applicant: Dr. inz. Zdzislaw Zaber Przedsiebiorstwo Produkcyjno-Uslugowe "Dr ZABER", 33-300 Nowy Sacz (PL)
(72) Inventor: Zaber, Zdzislaw, 33-300 Nowy Sacz (PL)
(74) Representative: Hudy, Ludwik

(57) **Abstract**

In a wind power station with a wind turbine (4) and a generator (3) having a horizontal rotating axis a control unit is used to control a setting mechanism for changing a setting angle (ß) of the rotor blades (42) of the wind turbine (4). The control unit is provided with a screw servo drive (1) comprising a control element situated along a rotary axis of a rotor of the wind turbine (4) and an executing element placed slideably along the rotary axis of the rotor of the wind turbine (4) and connected with the control element by an active power transmission thread. The executing element, being a screw, of the screw servo drive (1) is coupled with the setting mechanism of the setting angle (ß) of the rotor blades (42) of the wind turbine (4) and displacement of the executing element along the rotary axis of the wind turbine rotor causes the setting angle (ß) of the wind turbine rotor blades change. The control element of the screw servo drive (1) is set in rotational motion by an electric control motor (2) mounted by its body (25) to stationary elements of the wind power station. The electric control motor causes the control element to rotate at required rotational speed and to change the setting angle (ß) of the rotor blades (42) of the wind turbine (4) until the rotor of the wind turbine (4) rotates at the required rotational speed and to maintain the rotational speed of the rotor of the wind turbine at the required rotational speed using the active power transmission thread of the control element and the executing element.

## Description

The present invention relates to a control unit of wind power station with a wind turbine and a generator, both having a horizontal rotating axis, and causing wind turbine rotor blades angle change using a setting mechanism of a setting angle of a wind turbine rotor blades with a screw servo drive situated coaxially with a wind turbine rotor according to the preamble of claim 1. The screw servo drive comprises a control element situated along a rotary axis of the wind turbine rotor and an executing element of the screw servo drive placed moveably along the rotary axis of the wind turbine rotor and connected with the control element by an active power transmission thread. The invention relates also to a method for controlling the wind power station which works at variable rotor rotational speed of the wind turbine rotor and in which generated variable frequency current is converted into a current having frequency required in the electric network, according to the preamble of claim 9. The method and the control unit are applied for small wind power stations, in which all blades of the wind turbine rotor are uniformly set.

In the prior art are known devices for controlling the operation of wind power stations and related control methods which change the angle of attack of the blades and applied in heavy duty power stations, which consists in separate setting of each blade by means of servomechanisms placed in a wind turbine hub. These control systems are expensive, especially for small power stations. Known are also methods for controlling wind power stations provided with low speed generators in which, when the rotor rotational speed increases and eventually in the case of a strong wind exceeds the rated speed defined by a manufacturer, the surplus of generated energy is lost in resistors whereas to stop the power station the contacts of the rotor's main generator are short-circuited. Applied are as well control mechanisms designed according to Polish patent specifications no. PL170684 and no. PL180251 as well as to patent application P.330698. These control mechanisms are provided with a screw which is periodically driven either by a wind turbine rotor through a gear or by a separate electric motor to increase a screw rotational speed to be higher than a rotational speed of the rotor or the screw is stopped by a brake. The screw is mated with a nut which changes the position of the rotor blades through a lever system.

The purpose of the present invention is to provide a control unit of wind power station without above mentioned drawbacks and shortcomings of the known solutions. Furthermore, the purpose of the present invention is to provide a method for controlling the wind power station using the control unit of the wind power station.

Referring to the control unit the purpose of the invention is achieved by the control unit of wind power station having features of claim 1, whereas referring to the method for controlling the wind power station the purpose of the invention is achieved by the method having features mentioned in claim 9.

Preferable embodiments according to the invention have been submitted in dependent claims.

According to a method for controlling a wind power station having a generator and a wind turbine with adjustable rotor blades and working at a variable rotor rotational speed depended on wind velocity, a set angle of wind turbine rotor blades is controlled by a screw servo drive situated coaxially with the wind turbine rotor and inside the wind turbine rotor. The screw servo drive comprises an executing element mounted slidably in the wind turbine rotor along a rotary axis of the wind turbine rotor and a control element. In various states of operation of the power station, the control element of the screw servo drive is driven by an electric motor hereinafter referred as a control motor or an electric control motor which either sets the control element at the required or rated rotational speed of the wind turbine or it does not drive the control element at all or, in some conditions, the control element of the screw servo drive is braked. The rated speed of the wind turbine rotor is its rotational speed which corresponds to the rated rotational speed of the generator of wind power station defined by the manufacturer and which can correspond to required rotational speed. The required rotational speed can be a rotational speed lower than the rated rotational speed set accordingly to work conditions of the wind turbine. With the rated speed of the generator is also related its rated power, and both those parameters constitute the base for structural calculations in designing mechanical and electrical working units of the wind power station.

The main parts of the screw servo drive, as mentioned above, are the control element and the executing element whereby preferably the control element of this screw servo drive according to the invention is a control nut and the executing element is a driving screw whereas the driving screw is connected with the control element by an active power transmission thread connection which forms a comparing unit of rotary speed of the control element and rotary speed of the executing element. The executing element is coupled with the drive mechanism setting the blades of the wind turbine rotor. The turn direction of thread or windings of the screw servo drive is chosen or selected in such a way that if the rotational speed of the control element of the screw servo drive is lower than the rotor's rotational speed that mean in the case of a rotational speed of the wind turbine rotor exceeding the rated rotational speed or required rotational speed of the rotor as well as when the control element of the screw servo drive is immobilized, this executing element will increase the setting angle of the wind turbine blades. The maximum setting angle of the blades is in the case when the power station is at a standstill and is close to the right angle at which the wind blowing on the aerodynamic blade profile will generate no aerodynamic power which causes rotation of the wind turbine blades.

Operation of the comparing unit formed by the active power transmission thread connection of the control element and the executing element can be easily shown basing on two extreme working states of the active power transmission thread connection. When the rotor of the wind turbine is motionless that corresponds to the motionless executing element, to start-up the wind power station the control element is set in rotational motion and being not slidable causes the executing element to screw out from the control element and by using the setting mechanism for setting the setting angle ß of the blades of the wind turbine rotor to increase the setting angle ß of the blades of the wind turbine rotor. To stop working the wind power station the control element being a nut is stopped to rotate and being motionless by rotation of the executing element causes the executing element to screw in the control element and to move along its axis and by using the setting mechanism for setting the setting angle ß of the blades of the wind turbine rotor to decrease the setting angle ß of the blades of the wind turbine rotor.

In the power station controlled in a way according to the invention, the axis of the wind turbine rotor is substantially parallel to the wind direction and is horizontal with a permissible deviation from the horizontal position by an angle of few degrees. The head of the power station is set against the wind using known setting systems. The AC current generated in a wind power station has a frequency resulting from rotor's rotational speed and is transformed by an inverter, namely by an electronic device being a combination of a rectifier and a variable frequency drive (VFD), to a current whose frequency is equal to the frequency of the electric network.

The method for controlling the wind power station working in its characteristic working modes is described below.

Within the range of rotational speeds of the wind turbine rotor of the wind power station to be under control not lower than the required or nominal or rated speed, the electric control motor drives the control element of the screw servo drive to rotate at a rotational speed equal to the required rotational speed of the rotor of the wind turbine, for example equal to the nominal or rated rotational speed of the rotor of the wind turbine. As a result, there will be three alternative operating regime or status of the wind power station depending on the current or present rotational speed of the wind-driven rotor of the wind turbine.

When the rotational speed of the wind turbine rotor is equal to the required rotational speed of the wind turbine rotor, for example is equal to the nominal or rated speed, as well as the executing element of the screw servo drive slideably seated in the rotor and the control element of this servo motor drive driven by the electric control motor rotate at the same rotational speed and have the same direction of rotation, there is no relative rotary motion between the control element and the executing element of the screw servo drive from which one of them is a nut and the other one is a screw. Therefore, there is no displacement along the thread of one element of the screw servo drive in relation to other element of the screw servo drive. All the said elements of the power station will remain in uniform motion and there is kept the equilibrium between the energy absorbed from the wind and transmitted to the electric network.

When the rotational speed of the wind turbine rotor and the executing element of the screw servo motor seated slideably in the rotor is higher than the required rotational speed, and therefore, higher than the rotational speed of the control element of the screw servo drive driven by the electric control motor, there is a difference in the rotational speeds of the control element and the executing element of the screw servo drive. This difference in rotational speeds results in a relative rotary motion of one element of the screw servo drive in relation to the other one, and thanks the thread connecting both of the element, this motion is converted into a slidable motion of the executing element of the screw servo drive along the rotor axis. Then, the motion along the rotor axis causes the rotor blades to rotate increasing their setting angle, namely the angle between a chord of the blade aerodynamic profile and the rotor's plane of motion. In this case the rotational speed of the power station rotor is higher than the rated or nominal rotational speed which results in the excess of energy absorbed by the rotor from the blowing wind in relation to the electricity released to the electric network. After increasing the setting angle of the blades the absorption of wind energy drops and the power station tends towards the steady-state conditions.

In the case of an instantaneous decrease of the rotational speed of the rotor below the nominal or rated speed, for example, because the wind has died down or the load in the electric network is increased, the control element of the screw servo drive driven by the electric control motor keeps on rotating at the required, for example at the rated speed, and in consequence, the instantaneous speed of the wind turbine and the executing element of the screw servo drive slideably seated in the rotor is lower than the rotational speed of the control element of the screw servo drive. Hence, a difference in the rotational speeds of the control element and the executing element of the screw servo drive results in a relative rotary motion of one of those two elements of the screw servo drive in relation to the other one, and this relative rotary motion, through the thread connecting of both elements of the servo motor, is converted into a slidable motion of the executing element of the screw servo drive along the rotor axis, and the direction of the motion will be opposite to that described in the previous status when the rotor speed exceeded the rated speed. The slidable motion will be transmitted to adjust and to rotate the rotor blades decreasing their setting angle towards the nominal angle, and consequently, the power station tends again towards the steady-state conditions.

Within the range of rotational speeds of the power station turbine rotor below the required speed, for example below the nominal or rated speed, the control element of the screw servo drive will not be driven in a long time interval. Instead, the blades of the wind turbine rotor, as a result of control actions preceding this operating status or regime of the wind power station, are set to a position characterized by the nominal setting angle of these blades towards the plane of motion of the wind turbine rotor, and at this angle, the rotor efficiency is the highest, and therefore, the wind force is maximally utilized. The rotational speed of the wind turbine rotor of the power station results in this operating status from the equilibrium between the energy absorbed by the rotor from the blowing wind and energy absorption in the electric network. When either the wind speed increases or the energy absorption falls, the wind turbine rotor will accelerate, and when the rated speed has been reached, the electric control motor is switched on and the wind power station or plant enters the said operating regime at speeds not below the rated speed.

To decrease the speed of the wind turbine rotor, including the standstill of the turbine, the electric control motor is disconnected from the supply and the control element of the screw servo drive is braked. In consequence of these actions, the difference in the relative rotational speeds of the executing element of the screw servo drive and the stopped control element of this screw servo motor is the highest as possible, which causes a rapid motion in the thread connection of these elements, and thus a rapid displacement of the executing element of the screw servo drive which will be then transmitted to perform the adjusting rotation of the rotor blades, increasing their setting angle, namely the angle between the chord of the blade aerodynamic profile and the rotor's plane of motion. The setting angle of the blades will be increased until reaching the angle as set by the power station staff, or in emergency or in statuses preventing emergencies, until the maximum value of the setting angle of the blades is reached and is close to the right angle, which causes to stop the wind turbine rotor and to secure the power station elements against overload, for example, if the wind velocity considerably exceeds the designed rated speeds.

To re-start the wind turbine rotor from the standstill the electric control motor is switched on and drives the control element of the screw servo drive to rotate in rotation direction corresponding to rotation direction of the wind turbine. In consequence, thanks to the thread connecting the executing element and the control element of the screw servo drive is generated a slidable motion of the executing element in relation to the rotor which changes the setting angle of the blades of the wind turbine rotor. The rotor can start to work provided the wind is strong enough to rotate the blades whereas the screw servo drive driven by the electric control motor keeps on decreasing the setting angle of the rotor blades until the nominal angle has been reached.

In one of the embodiments pertaining to the way to control the work of the wind power station, the electric control motor which drives the control element of the screw servo drive of the wind power station is a synchronous motor. The synchronous motor can guarantee a stable rotational speed at which the control element of the screw servo drive is driven. An advantageous version is a permanent magnet synchronous motor (PMSM). At the normal operating regime of the wind power station, at wind turbine rotor speeds not lower than the rated speed as well as during the restart of the power station after a longer standstill, the electric control motor is supplied by an electric current whose frequency will guarantee the rotational speed equal to the rated speed of the wind turbine rotor of the control element of the screw servo drive which is driven by said electric control motor. Whereas, when wind turbine rotor speeds are below the rated speed, the electric control motor is not supplied and the rotating elements of the electric control motor rotate idly and are driven from the wind turbine rotor in consequence of coupling with the screw servo drive, including its control element.

In order to decrease the wind turbine rotor speed, also at speeds lower than the rated speed, as well as for bringing the said rotor to a standstill, the contacts of winding ends of the electric control motor are short-circuited. Then, in this operating regime the electric control motor is driven by the wind turbine rotor of the power station through the screw servo drive and in consequence, the electric control motor enters in the generator operation regime, whereas the short-circuiting of the contacts of winding ends causes a big overload torque known as dynamic braking. Such a braking process is possible due to a high tolerance to short-circuiting of PMSMs. Dynamic braking of the electric control motor means that the control element of the screw servo drive is braked, which, through the power transmission thread connection to the executing element of the servo motor produces a displacement of the executing element, and eventually, the abovementioned increase of the setting angle of the blades of the wind turbine rotor.

In another embodiment pertaining to the way to control the work of the wind power station, the electric control motor which drives the control element of the screw servo drive is coupled with a friction brake, normally applied to be braked, and is provided with an electromagnetic or electrohydraulic brake release. The brake release after supplying causes the brake to the released state, whereas without applying electricity, the brake is allowed to enter in the braked position spontaneously. In this variant of method for controlling the wind power station, the electric control motor is supplied by electricity, and in consequence, the control element of the screw servo is driven when the speed of the wind turbine rotor is not lower than the rated one, and this method is also used to restart the wind power station form the standstill. The sequence of control operations and their effects upon these operating regimes of the wind power station have been presented before, namely in the general description of the invention idea. They are identical for both control variants, however, in the first embodiment the control procedure of speeds of the wind turbine rotor lower than its nominal speed as well as while decreasing the speed of this rotor and bringing to a standstill is different.

In this embodiment one may use a motor with an in-built friction brake as applied in the traveling crane drive, however, there must be changed the supply system so that the release of its brake should be supplied by electric current irrespective of supplying the motor windings.

Within the range of rotational speeds of the wind turbine rotor below its rated speed, the electric control motor is not supplied, whereas the brake release is electrically supplied. In consequence, the brake is released, whereas the electric control motor together with the control element of the screw servo drive is not driven. Therefore, the electric control motor will not change the position of the rotor blades of the wind turbine which is set at the maximum angle in relation to the plane of motion of the rotor. To decrease the speed of the wind turbine rotor, also at speeds below the rated speed, including the rotor to bring to a standstill, the electric control motor and the brake release are not electrically supplied. Then, the brake will enter in the braked position, immobilizing the control element of the screw servo drive, which through the thread connecting the control element and the executing element of that screw servo drive causes a shift of the executing element, and eventually, a decrease of the setting angle of the blades of the wind turbine rotor, as described above.

In both embodiments pertaining to the method for controlling the wind power station, the electric control motor is advantageously situated coaxially with the wind turbine rotor, and therefore, coaxially with the screw servo drive. The electric control motor and the wind turbine rotor are located on the opposite sides of the main generator of the wind power station, whereby the screw servo drive passes through the interior of the rotor of the main generator. The rotating parts of the electric control motors are connected with the control element of the screw servo drive without any transmission gear. This allows obtaining a compact structure of the main wind power station units.

In another embodiment of connection of the electric control motor and the screw servo drive, the electric control motor can be connected with the control element of the screw servo drive by a transmission gear, which allows placing the electric control motor in a place different from the main generator axis if it should be convenient in view of specific conditions for locating wind power station units.

The method for controlling the wind power station permits as well the operation of this station when the rotational speed of the wind turbine rotor should be limited. In a need it is reduced the rotational speed of the electric control motor which eventually results in a decrease of the rated speed of the wind turbine rotor. In an advantageous way, a speed limitation is obtained by changing the frequency of the current supplying the electric control motor. The decrease in the rotational speed of the wind turbine rotor can be applied, for instance, to decrease the noise generated by the power station blades at night time.

According to the invention a unit to control the wind power station provided with the wind turbine whose rotation axis is parallel to the wind direction and operating to change the setting angle of the blades of the wind turbine rotor has the electric motor, hereinafter referred to as an electric control motor, whose body is set in the stationary elements of the power station. Furthermore, the unit to control the wind power station is also provided with the screw servo drive comprising the control element and the executing element connected with each other by the power transmission thread. The screw servo drive is situated in the wind turbine rotor coaxially to this rotor, and the executing element of the screw servo drive is placed slideably in the wind turbine rotor, along its rotation axis, and is coupled with the setting mechanism which adjusts and sets the rotor blades. The electric control motor drives the control element of the screw servo drive to rotate at the required rotational speed, for example at the nominal or rated rotational speed at which the wind turbine rotor should work.

In one of embodiments the electric control motor is a permanent magnet synchronous motor (PMSM). It is mounted coaxially to the wind turbine rotor of the wind power station to be controlled, and therefore, coaxially to the screw servo drive. The rotating parts of the electric control motor are connected with the control element of the screw servo drive without any transmission gear.

The wind power station being controlled is provided with an AC, advantageously with three-phase generator which produces the current whose frequency results from the ongoing or current rotational speed of the wind turbine rotor depending on the wind velocity. The electric energy obtained from wind energy is transformed by the inverter to a current whose frequency is as required in the electric network. The inverter is a combination of two electronic devices, namely a rectifier and a variable frequency drive (VFD). In the rectifier, AC current with a frequency depending on the ongoing wind velocity is converted into direct current, and then in the variable frequency drive (VFD) is converted to AC current as required in the electric network.

When the wind power station is in operation, the electric control motor of the control unit of wind power station is supplied by the current gained from its generator, transformed by the inverter to the required frequency, absorbed directly from the inverter. During the start-up of the power station, after bringing it to the standstill, the electric control motor is supplied from another source, advantageously from the electric network. During the operation of the wind power station and at its start-up, another variant is to supply the electric control motor from a source different from the power station generator and through its inverter, advantageously from the electric network.

The wiring system of the control unit of the wind power station provides a switch to short-circuit the electric control motor in order to use this motor in dynamic braking of the wind turbine rotor of the power station. In the short-circuited state, the electric control motor operating as a generator will produce a braking torque few times higher than its nominal torque. However, since the task of the electric control motor in this operating stage is to stop the control element of the screw servo drive to change the setting angle of the blades of the wind turbine rotor, therefore it is required a considerably smaller braking energy than in the case of direct braking of the wind turbine rotor by short-circuiting of the contacts of the main generator of the power station.

The circuit of the switch for short-circuiting the contacts of the electric control motor is closed mechanically, advantageously by using a spring. Opening and keeping the opened status is performed electrically, and the switch drive is supplied irrespective of supplying the electric control motor. These separate supply systems allow to supply only the switch drive so as to open the contacts of this switch, and simultaneously, there is no supply of the electric control motor, which is executed in the operating regime of the power station in which the rotor of the wind turbine rotates at a speed lower than the nominal or rated one, and thus, the electric control motor is not supplied. It is also possible to supply both the switch drive to open the switch contacts and the electric control motor so that it should drive the control element of the screw servo drive, which takes place when the power station operates in such a regime that the wind turbine rotor rotates at a speed not lower than the nominal or rated one, as well as during the start-up of the power station.

In its wiring system, the control unit is also provided with a position sensor of the executing element of the screw servo drive. This sensor, when the executing element reaches the position corresponding to the nominal setting angle of the rotor blades, disconnects the electric control motor from the electric supply. The sensor may operate in the zero-one system, namely either the sensor signals the position of the executing element of the screw servo drive causing the electric control motor to disconnect from the supply or the sensor signals no position. Here may be used various types of sensors, for example, magnetic, optical or mechanical limit switches.

It is advantageous to use measuring instrument to determine the position of the executing element of the screw servo drive or to have the sensor connected to such an instrument. Based on the position of the executing element of the screw servo drive there is a possibility to measure and record the current or ongoing setting angle of the blades of the wind turbine rotor of the wind power station.

The screw servo drive, as mentioned earlier in the description, comprises the control element and the executing element connected with each other by a power transmission thread. Advantageously, the control element of the screw servo drive is a control nut, whereas the executing element is a diving screw, especially with a trapezoidal thread. The driving screw is connected with adjustable rotor blades using lever mechanisms with ball joints, and these mechanisms convert the sliding motion of the executing element, namely the screw, in relation to the wind turbine rotor to adjust rotary motion of the blades of this rotor. Alternatively, when the motion is transmitted from the screw to the blades, the motion may be performed by racks placed on this screw and sliding together with it and mating with toothed wheels mounted on the blades of the wind turbine rotor which can rotate in blade bearing subassemblies of the wind turbine rotor.

According to the invention when the electric control motor is set to drive at the required rotational speed, for example at the nominal or rated speed, of the wind turbine there is a possibility to control continuously the rotational speed of the wind turbine rotor. The control unit of the power station promptly reacts to the slightest deviations from the rated speed of the wind turbine rotor and will tend towards keeping the equilibrium between the wind energy and the energy absorbed by the electric network. The braking effected by short-circuiting the windings of the electric control motor, not of the main generator, will diminish the current load on the braking system of the power station. In addition, the control of the power station by supplying the electric control motor with electric current having frequency that guarantees the rated speed of the motor to reduce, when needed, the rotational speed of the rotor of the wind power station, for example, in order to reduce the noise generated by the wind power station blades at night time.

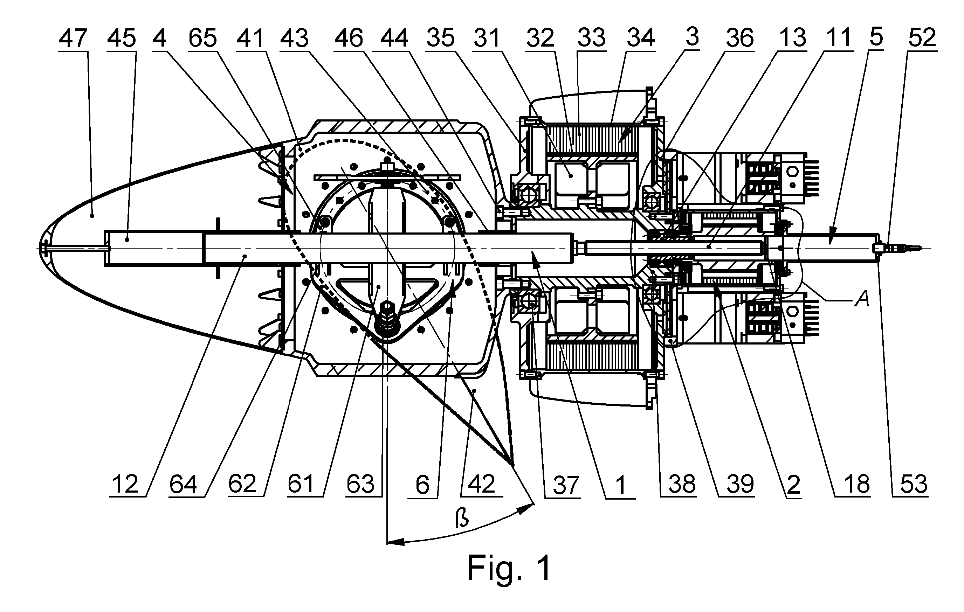

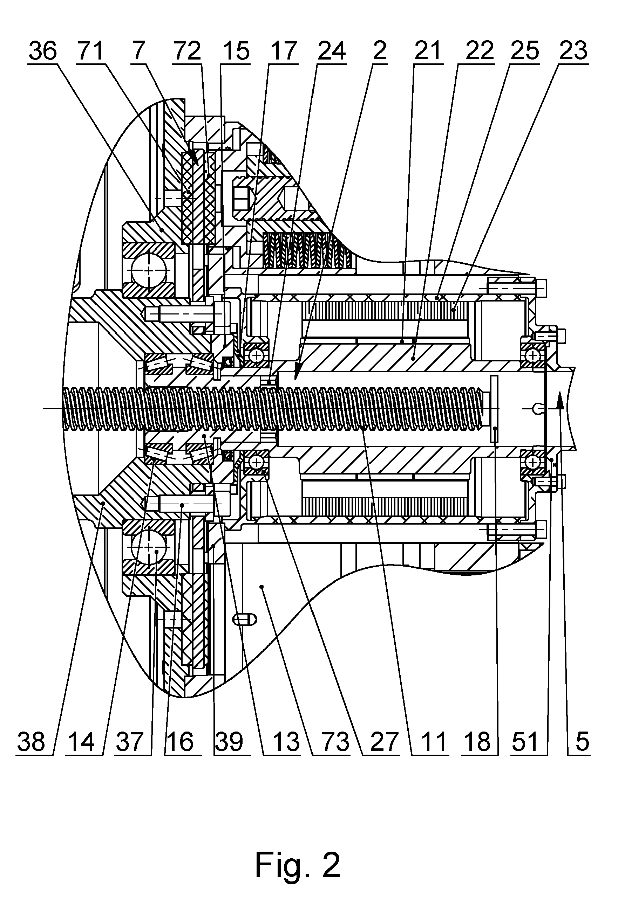

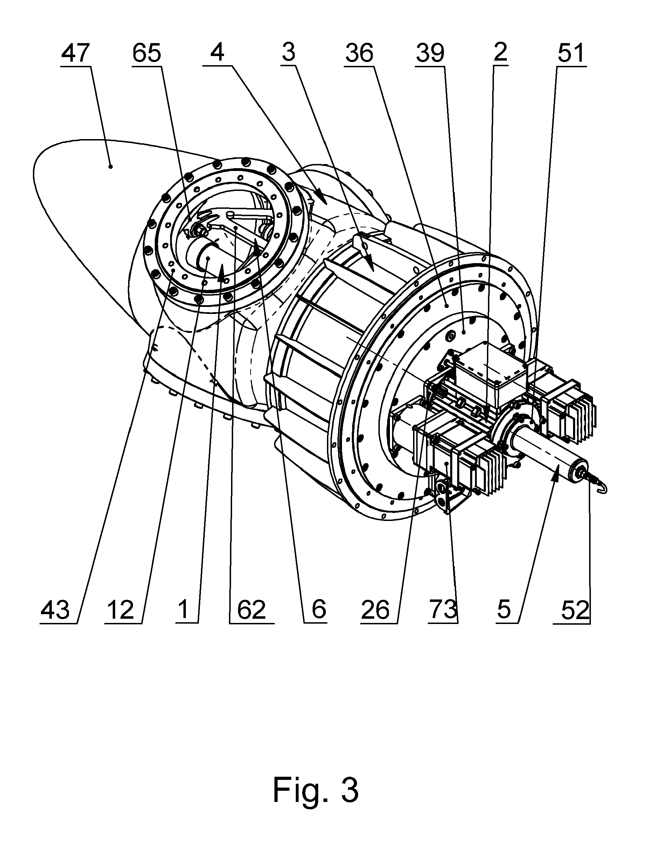

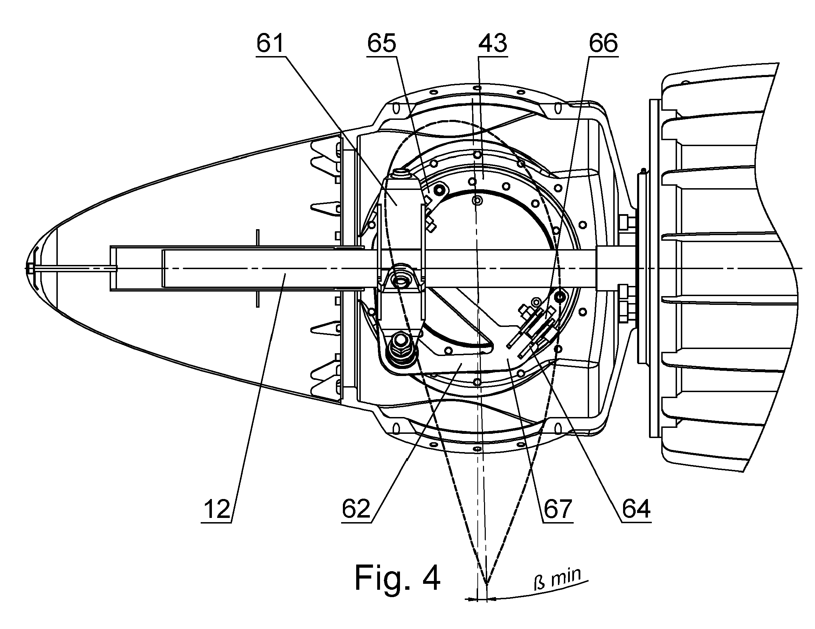

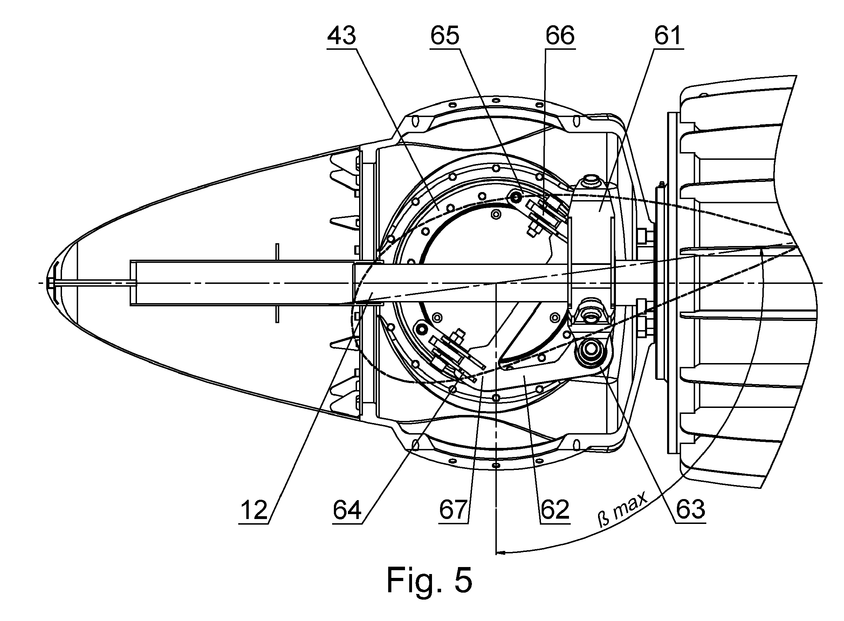

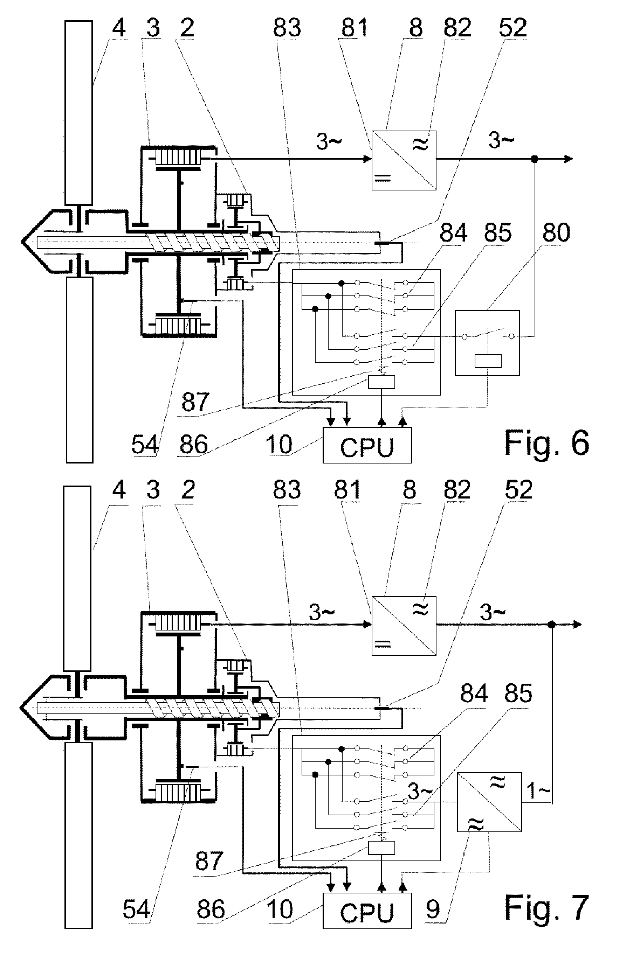

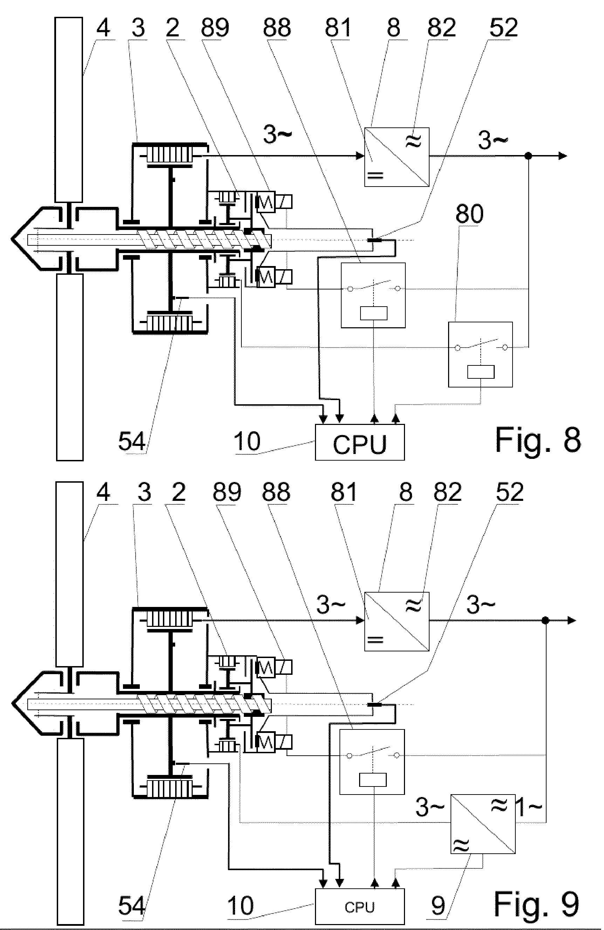

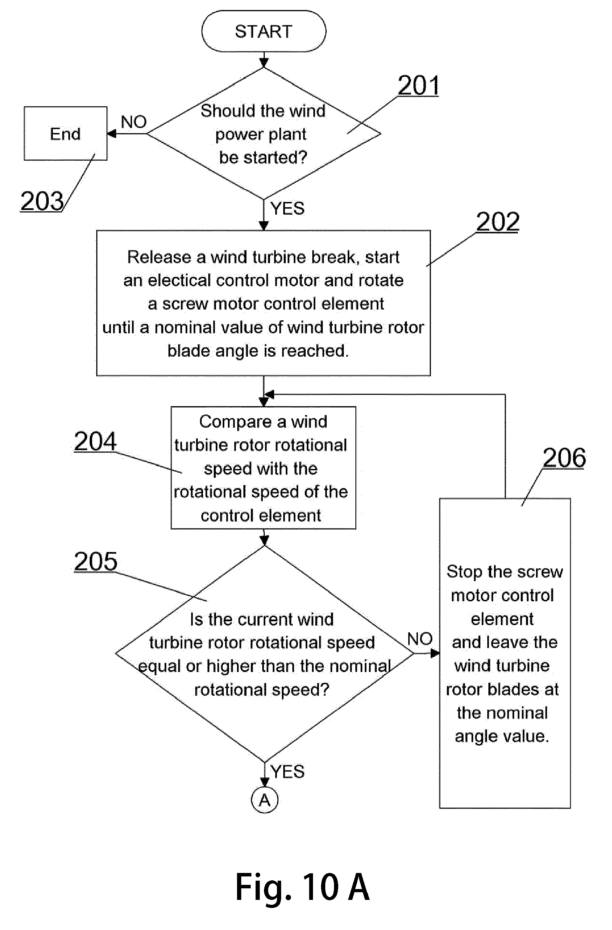

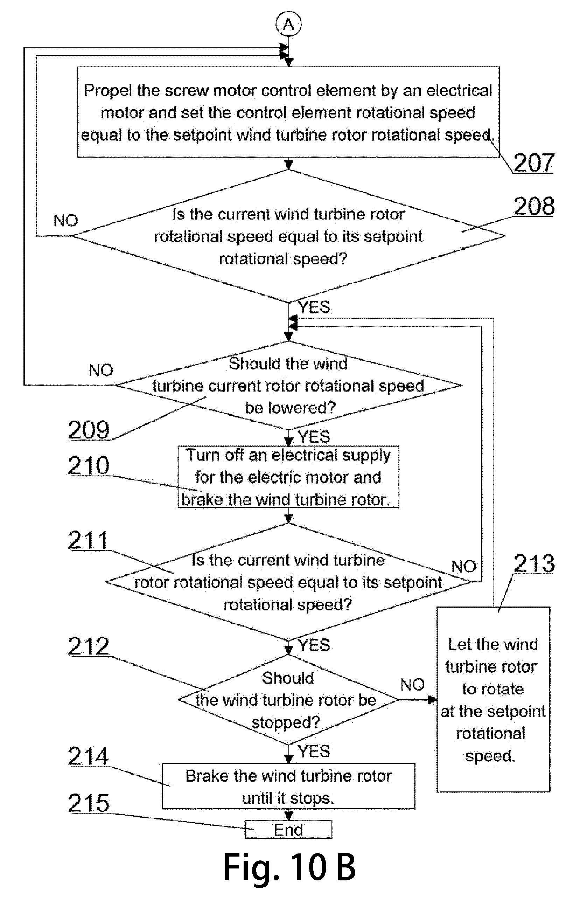

The invention has been illustrated in embodiments shown in the accompanying drawings, in which Fig. 1 shows a longitudinal section of a wind turbine of a wind power station with a generator, a control motor and other subassemblies, Fig. 2 shows a fragment of a connection of a control motor and a screw servo drive marked in Fig. 1 as a detail "A", Fig. 3 shows an axonometric view of a wind turbine without blades, with a generator and a control motor, Fig. 4 and 5 show views of a mechanism for setting wind turbine rotor blades, Fig. 6 shows schematically an electrical control unit in which the control motor is supplied by a three-phase current using an inverter, Fig. 7 shows schematically an electrical control unit in which a control motor is supplied by a one phase current using a control inverter, Fig. 8 shows schematically another embodiment of electrical control unit in which an electric control motor is supplied by a three-phase current using an inverter, Fig. 9 shows schematically another embodiment of the electrical control unit in which the electric control motor is supplied by a one-phase current using a control inverter, Fig. 10A and 10B show a block diagram of a method for controlling the wind power station.

A control unit of a wind power station, shown in Fig. 1 and 3, and in details in Figs. 2, 4 and 5, is provided with a screw servo drive 1 comprising an executing element being a screw actuator or, in another words, a driving screw 11 with trapezoid thread, which has an unthreaded sliding rod 12 on one side, and a control element being a control nut 13 with an inner thread mating with the trapezoid threaded driving screw 11. The control nut 13 of the screw servo drive 1 mates directly with a control electrical motor 2 which is a synchronous motor with permanent magnets 21 placed on its rotor 22 and mating with winding 23 arranged in a stator of this motor. The rotor 22 of the electric control motor 2 is connected with the control nut 13 of screw servo drive 1 through splines 24 cut inside a shaft of the rotor 22 gearing with an external splines on the control nut 13. The stator of the electric control motor 2 is mounted on a generator 3 of the wind power station in such a way that the rotor 22 of the control motor 2 and a rotor 31 of the generator 3 are coaxial. The generator 3 is an electric machine with permanent magnets 32 arranged on its rotor 31 and mating with a winding 33 which is a part of the stator of the generator 3, placed inside its body 34. The generator 3 is provided with an anterior bearing plate 35, a posterior bearing plate 36 and in both the plates are provided main roller bearings 37 to fit a main shaft 38 which is the shaft for both generators 3 and the mating wind turbine. On the posterior bearing plate 36 of the generator 3 is mounted a plate 39 with attached body 25 of the electric control motor 2, adjacent to this plate with its square flange 26 and fitted by screws passing through this flange.

The wind turbine 4 of the wind power station being controlled is provided with a hub 41 to mount three blades 42, and each of them is seated rotationally in the hub 41 through a crown roller bearing 43 which, during the operation of the wind power station, enables to adjust a setting angle ß of these blades relative to a plane perpendicular to an axis rotation of the rotor of the wind turbine this is up to the plane of the rotor movement, depending on the actual wind force and demand on the energy of electric current obtained in the wind turbine. The hub 41 of the wind turbine 4 is fitted with screws 44 to the face of the main shaft 38 of the generator 3, whereby its main bearings 37 are also bearing of the entire rotor of the wind turbine 4. A body 34 of the generator 3 is mounted in a tower (not shown in the figure) of the power station, in its head rotating around a vertical axis for setting the wind turbine rotor in the direction of the wind presently blowing. In the rotor of the wind turbine 4, in its rotation axis, is also placed an anterior guide 45 and a posterior guide 46 in which the slidable rod 12 of the driving screw 11 moves along the rotation axis of the wind turbine. The face of the hub 41 of the wind turbine is covered with streamlined, aerodynamic deflector 47.

The main shaft 38 seated or embedded in the generator 3, is hollow along its geometric axis, and through this hollow the driving screw 11 passes with its part of slidable rod 12 of the screw servo drive 1. From the control motor 2, the main shaft 38 is provided with a seat for the control nut 13, which in this seat in the main shaft 38 is mounted by means of a pair of conical roller bearings 14. In one embodiment in order to eliminate clearances in the conical roller bearings 14, this group of the bearings is provided with a pressure plate 15, mounted to the main shaft 38 by screws 16, and this plate presses upon an external ring of the conical roller bearing 14 situated from the side of the control motor 2. Between the pressure plate 15 and an internal ring of a roller bearing 27 of the control motor 2 is expanded an elastic fastener 17, which transmits, by the friction force generated between this fastener and the ring of the roller bearing 27 in the control motor 2, the drive from the main shaft 38 through the pressure plate 15 mounted or fixed thereon to the external ring of the roller bearing 27, and eventually, on the rotor 22 of the control motor 2 on which roller bearing 27 is seated. Such a drive transmission from the main shaft 38 to the rotor 22 of the control motor 2 prevents a disadvantageous effect of the motion resistance in the control motor 2 upon the position of the nut 13 of the screw servo drive 1 in such a working regime of the control unit, in which the control motor 2 is not driven.

The rotor 22 of the electric control motor 2 is centrally hollowed along its length, except the splines 24, and a diameter of this hollow is larger than the maximum diameter of spline notches. In the hollow of the rotor 22 is situated a section of the driving screw 11, protruding from the control nut 13. On the extension of the control motor 2 is provided a cover or shield 5 whose flange 51 adheres to a bearing plate of the electric control motor 2 and is attached to it by screws passing through the flange 51 of this cover or shield. According to the position of the driving screw 11, its end can be located either inside the hollow in the rotor 22, or protruding beyond the electric control motor 2, to be in the shield 5. At the end of the shield 5, opposite to the flange 51, is mounted an ultrasound or ultrasonic sensor 52 or another sensor, centrally embedded in a bottom 53 which closes this shield. The sensor 52 measures the distance to the face of the driving screw 11 formed as a measuring shield 18. The time of the signal waveform from the ultrasonic sensor 52 to the measuring shield 18 and back to the sensor allows measuring the current position of the driving screw 11, which indirectly indicates the setting angle ß of the blades 42 of the rotor of the wind turbine 4 in relation to the plane of the motion of this rotor.

The drive is transmitted from the screw servo drive 1 to the adjustable blades 42 of the wind turbine 4 through a lever mechanism 6 placed inside the hub 41 of the wind turbine. The lever mechanism 6, the mechanism for adjusting the angle of the rotor blades of the wind turbine, is provided with a three-arm connector 61 whose arms are arranged at 120° intervals on the slidable rod 12 of the driving screw 11 and moves with it along the rotation axis of the rotor of the wind turbine 4 of the power station, and is provided with three levers 62 whose shape is similar to a capital letter A. Each lever 62, on its apex, is connected through a ball joint 63 with one arm of the three-arm connector 61, and on the opposite side of legs 67 has lugs 64, which with pivots 66, shown in Figs. 4 and 5, are connected with holders 65 attached with screws to an internal ring of the crown bearing 43 turning together with the blade 42 of the wind turbine in its adjustment motion.

For safety reasons, it is required that the wind power station should have at least two independently operating braking systems. Therefore, the control system of the present embodiment is also provided with a brake disk 7 situated between the posterior bearing plate 36 of the generator 3 and the plate 39 of this generator. The brake disk 7, shown in detail in Fig. 2, is fixed by the screws 16 to the main shaft 38 of the generator 3, with a possibility of a slight displacement along the shaft axis. The brake disk mates with two pairs of brake pads, and each of them comprises of a stationary pad 71, embedded in the posterior bearing plate 36 of the generator 3, and of a movable pad 72 mating with a stepper motor 73 mounted on the plate 39. The movable brake pads 72 are pressed to the brake disk 7 by springs placed in bodies of the stepper motors 73, which causes the generator 3 and the rotor of the wind turbine 4 to brake, and displacement of the movable brake pads 72 in the state of the released brake is implemented by the action of the stepper motor 73 supplied by electricity. The power of the stepper motors 73 and the force of springs arranged in them is selected in such a way that each of them may stop the brake disk 7 using its own springs and by itself, also in case of emergency. In the normal working regime of the power station, when it is stopped with the control motor 2, the brake disk 7 serves for the final stoppage of the wind power station and keeping it in such a status when dynamic braking through the electric control motor 2 is no longer active.

An electrical wiring system of the controlled power station, shown in the various embodiments in Figs. 6, 7, 8, 9 is provided with an inverter 8 which is a combination of a rectifier 81 and an inverter or variable frequency drive (VFD) 82. A three-phase AC current obtained from wind energy, whose frequency results from the present wind force, is transmitted from the generator 3 to the rectifier 81 where it is converted to DC current, and then in the variable frequency drive (VFD) 82 is transformed to the three-phase AC current whose frequency corresponds to the frequency in the power grid or energy network to which the current is released. Directly from the inverter is discharged a group of three-phase conductors to supply the electric control motor 2, with a switch 80 to cut off the supply of this motor when the power station operates below its required speed, for example the rated speed. In the embodiment shown in Figs. 6, 7, in the electrical system is a linker-contactor 83, having switching contacts 84, through which is powered the electric control motor 2 in its regulatory working, and additional contacts 85 shorting circuits of coils of the electric control motor 2, for the implementation of the dynamic braking. In the contactor 83 is a spring 87 closing the additional contacts 85 for shorting the windings of the control motor 2, when the contactor moves in opposite state, or closing the switching contacts 84 when opens the additional contacts 85, and sustaining in this state is driven by a coil 86, powered by electricity independently or regardless from the powering of the electric control motor. In the embodiment shown in Figs. 8 and 9, in the electrical wiring system there is an additional switching interrupter 88, which by means of a coil controls a brake release 89. The control of the operation of the wind power station and controlling the electric control motor, the circuit breakers, the inventers and the other components of the wind power station is done by a control unit 10, shown in Figs. 6, 7, 8, 9, connected to a sensor 54 of the rotational speed of the rotor of the generator 3 and of the rotor of the wind turbine 4.

During normal operation of the wind turbine, generally occurs one of two states of its work, depending of the balance of the wind energy and the demand for electricity given away from this power station. The first state is the work of the power station with the rotational speed of the rotor of the wind turbine not greater than the nominal speed of the rotor, or at the speed which is lower or equal to the nominal speed, and the second state is the work with the rotational speed of this rotor which is greater than its nominal speed. The optimal state is the work of the wind turbine with the rotational speed of the rotor which is exactly equal to the nominal speed, or the maximum speed of the first said condition of the work, which is the aim of a method for controlling, or at least oscillating around this speed.

During operation of the wind turbine with the rotational speed of the rotor lower than the nominal or rated, which occurs when the wind speed is lower than assumed, or this wind is weaker, the rotor of the wind turbine 4 of the power station rotates at the speed lower than a predetermined or required speed, for example, the nominal or rated rotational speed of this rotor. In this embodiment the generator 3 is a synchronous generator and generates three-phase alternating electric current, which frequency is lower than required in the power grid, and resulting from the rotational speed of the wind turbine 4 and of the generator 3. The electric current obtained from the wind energy is processed in the inverter 8 to the electric current of the desired frequency. The three-phase current obtained from the generator 3 is processed by the inverter 8, firstly in the rectifier 81 to direct current, then by the inverter 82 is processed into three-phase alternating current having frequency required by the power grid or energy network. In one of the operating states or conditions of the wind turbine when the wind turbine rotor rotates at a speed lower than a predetermined or given, in particular lower than the nominal, the blades 42 of the rotor of the wind turbine 4 are set at the angle ß, equal to the nominal angle at which the efficiency of the wind turbine is the highest. The electric control motor 2 is not supplied with the electric current and the motor rotates together with the rotor of the wind turbine 4 and of the generator 3 with the same rotational speed, whereby the control motor 2 receives the drive, through the splines 24, from the control nut 13 of the screw servo drive 1, which in this operating condition does not move on the driving screw 11. In addition the rotor 22 of the control motor 2 is driven by the elastic fastener 17, which by the friction force between the fastener and the internal ring of the roller bearing 27 in the control motor 2 transmits the drive from the main shaft 38 of the generator. Transmission of the drive on the rotor 22 of the control motor 2 compensates the motion resistance of the rotor 22 in the control motor 2, to prevent the movement of the control nut 13 of the screw servo drive 1, which could occur if there is no compensation of this motion resistance.

After reaching by the wind turbine 4 the given, in particular the nominal or rated rotational speed of the rotor, which occurs when the speed increases and also the force of the wind, or when the energy consumption is reduced energy, the electric control motor 2 is supplied by the alternating three-phase current with the frequency, which gives it the rotational speed equal to the predetermined rotational speed, for example, the nominal rotational speed of the wind turbine. The control motor is supplied from the inverter 82, which is a part of the inverter 8, from a terminal located directly behind the inverter 8. In this case the control nut 13, which is the control element, rotates with the same speed as the electric control motor 2 and is driven via the splines 24 by the rotor 22 of the control motor.

If the rotational speed of the rotor of the wind turbine 4, namely the rotational speed of the driving screw 11, keeps on increasing, there occurs a difference in the rotational speeds of the control element and the executing element or respectively, of the control nut 13 and the driving screw 11, of the screw servo drive 1. Such a difference causes a relative rotary motion of the control nut 13 in relation to the driving screw 11, and this motion, through the thread which connects both elements, is converted to the sliding motion of the driving screw 11 and its control sliding rod 12 along the axis of the rotor of the wind turbine 4. With the control rod 12 is also moved three-arm connector 61 which is a part of a lever mechanism 6 and through ball joints 63 this connector presses upon three levers 62, and in consequence each lever turns around the mating internal ring of the crown bearing 43 in the hub 41 of the wind turbine 4. A simultaneous turn occurs in all three crown bearings 43 and the blades 42 of the rotor situated in them turn as well and their setting angle ß increase in relation to the plane of the motion of the rotor of the wind turbine 4, that is the plane perpendicular to the axis of the rotation of the rotor of the wind turbine 4.

In consequence of increasing the setting angle ß of the blades 42, the rotational speed of the rotor of the wind turbine 4 decreases and tends towards its required speed, for example towards the nominal speed, at which both, the rotor of the wind turbine 4, the driving screw 11 slideably seated in it as well as the control nut 13 driven by the control motor 2 rotate at the same speed and in the same direction. Therefore then, between the elements of the screw servo drive 1, namely the control nut 13 and the driving screw 11, is no relative rotary motion, and there is no movement of the control nut 13 on the tread of the driving screw 11. All the said elements of the power station will remain in uniform motion and keep the balance of the energy absorbed from the wind and released to the power grid or energy network.

In the case of an instantaneous decrease in the rotational speed of the rotor of the wind turbine 4 below its required speed, for example below the nominal rotational speed, due to a weaker wind or increased load of the power grid, the control nut 13, driven by the electric control motor 2, keeps on rotating at the required speed, and therefore the instantaneous rotary speed of the driving screw 11 is lower than the rotating speed of the control nut 13. Such a difference in speeds results in the relative rotary motion between the control nut 13 and the driving screw 11 due the thread connecting of both elements is transformed into the sliding motion of the driving screw 11 along the axis of the rotor of the wind turbine 4, in the direction to increase the rotational speed contrary to earlier situation when the current rotational speed was for example greater than the nominal rotational speed. In consequence, the driving screw 11 and its control sliding rod 12, through lever the mechanism 6, will decrease the setting angle ß of the blades 42 towards the nominal angle, and in consequence, the absorption of the wind energy increases and the power station tends to achieve the operating state determined at the required speed, in particular at the nominal rotational speed.

In order to reduce the speed of the rotor of the wind turbine 4, also at its speeds lower than the nominal speed, including bringing the wind turbine to a standstill, the control motor 2 is not supplied and its windings are short-circuited with the additional contacts 85 of the linker-contactor 83. Then, the control motor 2 is driven by the rotor of the wind turbine 4 through the driving screw 11 rotating with it and the control nut 13 of the screw servo drive 1, and in consequence, the electric control motor 2 achieves the generator's operation state, whereas the short-circuiting of its contacts causes the motor to load by a high load torque called a dynamic braking. Therefore, the control nut 13 will be immobilized, and in consequence, the relative rotational speed of the driving crew 11 is the highest as possible, which causes a fast move of the driving screw 11, and eventually a rapid increase of the setting angle ß of the blades 42. The setting angle ß of the blades 42 is increased until reaching the setting angle as required by the power station staff or in emergencies or statuses preventing from emergencies, until reaching the maximum setting angle of the blades, close to the right angle, at which the wind turbine rotor is stopped. In the final phase of the braking, the brake pads 71, 72 are clamped on the brake disk 7 using the stepper motor 73. Such a friction braking system keeps the power station in the braked state when a dynamic braking caused by the electric control motor 2 is no longer operative due to the lacking of the rotary motion of the electric control motor.

To restart the stopped rotor of the wind turbine 4, there must be switched on the electric control motor 2 which is set at the rotary speed equal to the required speed, in particular to the nominal speed of the wind turbine, in the required rotation. In this mode of the operation, the control motor 2 is supplied from a source different than inverter's VFD, especially, it is supplied from the power grid cooperating with the controlled wind power station. The electric control motor 2 turns the control nut 13, which causes sliding motion of the driving nut 11 and decreasing the setting angle ß of the blades 42 of the rotor of the wind turbine 4. The rotor of the wind turbine 4, already during the setting of the blades 42, may start to work if the wind is strong enough, nevertheless, the screw servo drive 1, driven by the control motor 2, still increases the setting angle ß of the blades 42 of the rotor until the nominal angle has been reached.

In all working states of the wind power station, especially during its restart after a standstill, the ultrasonic sensor 52 placed in the shield 5 measures the distance between the face of the driving screw 11, formed as the measuring shield 18, and this sensor. Furthermore, by the sensor 54 of the rotational speed is measured the rotational speed of the wind turbine rotor, the measured value is transmitted to the control unit 10. Due to the link mechanisms that connect the driving screw 11 with the blades 42 of the rotor of the wind turbine 4, the measurement of the present position of the driving screw 11 indirectly indicates the setting angle ß of these blades 42. When the setting angle ß of the blades 42 decreases to reach the nominal value, a signal from the sensor 52 switch off the supply of the electric control motor.

As alternative is using another control motor which in one of embodiments is a three-phase synchronous motor with a friction brake built in normally braked, and released electromagnetically, which means that until the voltage is no applied to the coil of the brake release, the brake shoes clamp on the brake disk preventing the rotation of the motor shaft. This may be a motor used to drive cranes, but with a modified motor supply system in such a way that the windings of the brake release 89 shown in Figs. 8 and 9, might be supplied with electricity through the switching interrupter 88 independently from the power supply of the drive windings of this motor. In consequence of using another control motor the control method of the power station operation will be modified as well.

In this embodiment during the operation of the wind power station at the rotational speed of the rotor below the nominal speed, the windings of the control motor are not supplied with the electric current, and the brake release 89 built in the control motor is supplied with the electric current, therefore the brake is held off. In this mode or state of the working state, the blades of the wind turbine rotor are set at the nominal angle, at which the efficiency of the wind turbine is the highest. The wind turbine rotor and the generator rotate at the same rotational speed, however, the control motor is driven by the control nut of the screw servo drive.

When the wind turbine rotor reaches the required rotational speed, for example the nominal rotational speed of the rotor, 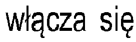 the supply of the driving windings of the control motor with the three-phase current, whose frequency guaranties the rotational speed equal to the nominal rotational speed of the wind turbine. Simultaneously, the brake release 89 of the brake built in the control motor is still supplied by the electric current, in order to release this brake. The control motor drives the control nut of the screw servo drive, also in the case of an instantaneous decrease in the rotational speed of the wind turbine rotor. The control nut mates with the driving screw and other elements of the control system mechanism, like in another embodiments for the identical working state. In the above embodiment in order to reduce the speed of the wind turbine rotor, also when speed values are below the required rotational speed, for example below the nominal rotational speed, also in order to completely stop the wind turbine, the power supply of the windings of the control motor is disconnected. The power supply of the brake release 87 built in the control motor is also disconnected, and thereupon by the action of the springs, the brake automatically switches to the braked position. This immobilizes the control nut of the screw servo drive, and as a result increases the setting angle of the blades of the wind turbine rotor to a value as desired by the power station staff, or in emergencies or to protect against failure, until the setting angle of the blades is close to the right angle, to stop the wind turbine rotor. In the described embodiment, in order to restart the stopped wind turbine rotor, the control motor is supplied with the electric current and rotates at the rotational speed equal to the nominal speed of the wind turbine in the direction predetermined with the direction of the rotations. At the same time the brake release built in the control motor is supplied with the electric current, so that the brake is released. The control motor rotates the control nut which mates with the driving screw and other elements of the mechanism of the control unit. During operation of the power station, the ultrasonic sensor measures the distance between the driving screw face from this sensor and determines indirectly the setting angle of the wind rotor blades. The power station, apart from the control motor with the brake built in, is also provided with the second friction brake, normally braked, and mounted on its main shaft to guarantee two independent braking systems.

The method for controlling the wind power station with an electric wiring system shown in Figs. 7 and 9 is similar to the method for controlling the wind power station with the electric wiring system shown in Figs. 6 and 8. The difference consists only in supplying the control motor 2. Electric energy is supplied from one of the phase of the power grid not only during the start-up of the power station, but also during operation at rotor speeds not lower than the required speed, in particular the nominal speed. In this embodiment one-phase alternating current is transformed by the control inverter 9 to three-phase current to supply the control motor 2. The control inverter together with the contactor 83 executes the disconnection in the operating state at the rotor speeds lower than the nominal one. Control of the wind power station and controlling of the control motor, of the switches, of the inverters and another units of the wind power station is realized by the control unit 10 connected to the sensor 54 of the rotational speed of the rotor of the generator 3 and of the rotor of the wind turbine 4.

In order to reduce or decrease the rotational speed of the wind turbine rotor below the nominal speed, at which the wind power station achieves the highest efficiency, the control motor is supplied by a current whose frequency is lower than the frequency used in the standard operating of the power station. The control motor in such an embodiment is a synchronous motor, whose rotational speed results from the frequency of the supply current, and rotates at a reduced or lower speed adjusting the blades of the wind turbine rotor for keeping the proportionally reduced speed of the required value, lower than the nominal speed. The operation of the power station at the speed of the wind turbine rotor lower than the nominal speed may be carried out in all above described embodiments. The decrease of the rotational speed below the nominal speed is useful in particular at night time in order to reduce the noise generated during the operation of the power plant, especially noise generated by the blade ends passing the air.

Figs. 10A and 10B show a block diagram pertaining to the method for controlling the wind power station or the wind power plant. Referring to this block diagram in step 201 a signal for starting the wind power station is awaited and when there is no signal the procedure to start the wind power station is ended in step 203 in case when the wind power station has been started to work. To let working the wind power station a brake of the wind turbine 4 is released in step 202 and the electric control motor is powered as well as the control element of the screw servo drive 1 is set in motion to rotate at the required rotational speed of the rotor of the wind turbine 4, for example at the nominal rotational speed, until the nominal value of angle ß of the blades of the rotor of the wind turbine is reached. In step 204 the rotational speed of the rotor of the wind turbine 4 and the rotational speed of the wind turbine or of the control element of the screw servo drive is compared using a comparison unit being the active power transmission thread of the control element and the executing element formed by the slidable rod coupled with the rotor of the wind turbine, whereas in step 205 is checked whether the current rotational speed of the rotor of the wind turbine is equal or higher than the given rotational speed, for example the nominal rotational seed. At the current rotational speed of the rotor of the wind turbine 4 not lower than the given rotational speed in step 207 the control element of the screw servo drive 1 is driven by the control electrical motor 2 to rotate in the same rotation direction as rotation direction of the rotor of the wind turbine 4 and at the given rotational speed which should be equal to the rotational speed of the rotor of the wind turbine 4, for example at the nominal rotational speed. Otherwise in step 206 in one of embodiments the control element of the screw servo drive is no more driven and the blades of the rotor of the wind turbine are left to work at the nominal value of angle ß. After starting to work and during the work of the wind power station in step 208 is checked whether the current rotational speed of the rotor of the wind turbine is equal or higher than the required rotational speed, for example the nominal rotational speed, whereas in step 209 is checked whether the current rotational speed of the rotor of the wind turbine should be not lowered. For lowering the current rotational speed of the rotor of the wind turbine 4, including stopping the rotor of the wind turbine 4, in step 210 the electrical motor 2 is disconnected from electrical supply and the control element of the screw servo drive 1 is braked and in step 211 is checked. Again in step 211 is checked whether the current rotational speed of the rotor of the wind turbine is equal to the required rotational speed and when not the procedure is directed to step 209. In step 212 is checked whether the rotor of the wind turbine is stopped and in case when the current rotational speed of the rotor of the wind turbine 4 is equal to the required rotational speed, in step 213 the rotor of the wind turbine 4 is left to rotate at the required rotational speed, especially at the nominal rotational speed. In case when there is a need to stop the rotor of the wind turbine, in step 214 the current rotational speed is lowered until stopping the rotor and the work of the wind power station is ended in step 215.

## Claims

1. A control unit of a wind power station with a wind turbine and a generator, both having a horizontal rotating axis, and causing wind turbine rotor blades angle change using a setting mechanism of the wind turbine rotor blades, whereby the control unit is provided with a screw servo drive situated coaxially with a wind turbine rotor whereas the screw servo drive comprises a control element situated along a rotary axis of the wind turbine rotor and an executing element placed slideably along the rotary axis of the wind turbine rotor and connected with the control element by an active power transmission thread having such thread convolution direction that that at a rotational speed of the control element of the screw servo drive lower than a rotor's rotational speed and when the control element of the screw servo drive is immobilized the executing element of the screw servo drive increases a setting angle of the wind turbine rotor blades, whereby the executing element is coupled with the setting mechanism of the wind turbine rotor blades and displacement of the executing element along the rotary axis of the wind turbine rotor causes the setting angle of the wind turbine rotor blades change, **characterised in that** executing element of the screw servo drive (1) is coupled with the rotor of the wind turbine (4) using the setting mechanism of the setting angle (ß) of the rotor blades (42) of the wind turbine (4) and the control element of the screw servo drive (1) is set in rotational motion by an electric control motor (2) mounted by its body (25) to stationary elements of the wind power station, whereby the electric control motor (2) causes the control element to rotate at required rotational speed and to change the setting angle (ß) of the rotor blades (42) of the wind turbine (4) until the rotor of the wind turbine (4) rotates at the required rotational speed and to maintain the rotational speed of the rotor of the wind turbine at the required rotational speed using the active power transmission thread of the control element and the executing element.

2. The control unit according to claim 1, **characterized in that** the control element of the screw servo drive (1) is a control nut (13) connected with the executing element of the screw servo drive (1) being a drive screw (11) by the active power transmission thread having a trapezoidal thread.

3. The control unit according to claim 1 or 2, **characterized in that** electric control motor (2) is an electric synchronous motor with permanent magnets (21) seated coaxially with the rotor of the wind turbine (4) of the power station.

4. The control unit according to claim 1 or 2 or 3, **characterized in that** the electric control motor (2) is situated coaxially with the rotor of the wind turbine (4) and rotating elements of the electric control motor (2) are coupled with the control element of the screw servo drive (1).

5. The control unit according to one of claims from 1 to 4, **characterized in that** the generator of the wind power station is an AC generator (3) generating current having frequency resulting from an actual rotational speed of the rotor of the wind turbine (4) which is transformed by an inverter (8) to a current whose current frequency is frequency of an electrical network and the electric control motor (2) is supplied by the current generated by the AC generator transformed by the inverter (8) during a work mode of the wind power station whereas during the start-up of the wind power station the electric control motor (2) is supplied by source of energy another then AC generator (3), advantageously from the electrical network.

6. The control unit according to one of claims from 1 to 4, **characterized in that** the generator of the wind power station is an AC generator (3) generating current having frequency resulting from an actual rotational speed of the rotor of the wind turbine (4) which is transformed by an inverter (8) to a current whose current frequency is frequency of the electrical network and the electric control motor (2) is supplied during a work mode of the wind power station and during the start-up of the wind power station by source of energy another then AC generator (3), advantageously from the electrical power network.

7. The control unit according to claim 5 or 6, **characterized in that** a wiring system of the electric control motor (2) is provided with a switch (83) to short-circuit end contacts of coils of the electric control motor (2) whereby short-circuiting of the end contacts is performed mechanically, advantageously by spring (5), and pulling apart of the end contacts and keeping apart the end contacts is performed using a coil (86) of a switch (83) independently from the supply of the electric control motor (2).

8. The control unit according to claim 5 or 6 or 7, **characterized in that** an electric circuit of the electric control motor (2) is provided with a position sensor (52) of the executing element (11) of the screw servo drive (1) which disconnects the supply of the electric control motor (2) when the executing element (11) reaches a position corresponding to the minimum value of the setting angle (ß) of the rotor blades (42).

9. A method for controlling a wind power station using a control unit to control the wind power station provided with a wind turbine and a generator, both having a horizontal rotating axis, whereby the control unit comprises a screw servo drive having a control element and an executing element according to one of claims 1 to 8, **characterised in that** after starting of the wind power station and defining a required rotational speed of a rotor of a wind turbine (4), a current rotational speed of the rotor of the wind turbine (4) is compared with a rotational speed of the control element of the screw servo drive, and at the current rotational speed of the rotor of the wind turbine (4) not lower than the required rotational speed, the control element is set in motion by an electrical motor (2) to rotate at the required rotational speed and in the same rotation direction as rotation direction of the rotor of the wind turbine (4), whereas at the current rotational speed of the rotor of the wind turbine (4) lower than the required rotational speed, the control element of the screw servo drive is not driven and blades of the rotor of the wind turbine (4) are set at a nominal value of angle (ß), whereby for lowering the current rotational speed of the rotor of the wind turbine (4), including stopping the rotor of the wind turbine (4), the electrical motor (2) is disconnected from electrical supply and the control element of the screw servo drive (1) is braked, whereas for setting in motion of the stopped rotor of the wind turbine (4), the electrical motor (2) is supplied by electrical energy and drives the control element of the screw servo drive (1) until the blades (42) of the rotor of the wind turbine (4) are set at the nominal value of angle (ß).

10. The method according to claim 9, **characterized in that** for lowering the current rotational speed of the rotor of the wind turbine (4), including stopping the rotor of the wind turbine (4), end contacts of coils of the electric control motor (2) are short-circuited causing dynamic braking of the electric control motor (2) and the control element of the screw servo drive (1).

11. The method according to claim 9 or 10, **characterized in that** the electric control motor (2) which drives the control element of the screw servo drive (1) is coupled with a brake normally applied and provided with a brake release, whereby at the current rotational speed of the rotor of the wind turbine (4) lower than the required rotational speed the electric control motor (2) is not supplied and the brake release is powered by current supply and the blades of the rotor of the wind turbine until are set at the nominal value of angle (ß) whereas for lowering the current rotational speed of the rotor of the wind turbine (4), including stopping the rotor of the wind turbine (4), the electric control motor (2) and the brake release are not supplied.

12. The method according to claim 9 or 10 or 11, **characterized in that** the rotational speed of the electric control motor is lowered when needed by changing the frequency of the current supplying the electric control motor in order to limit the rotational speed of the rotor of the wind turbine (4).
